(19) Europäisches Patentamt
European Patent Office
Office européen des brevets

(11) **EP 3 001 382 B1**

(12) **EUROPEAN PATENT SPECIFICATION**

(45) Date of publication and mention
of the grant of the patent:
**13.09.2017 Bulletin 2017/37**

(51) Int Cl.:
*G06T 5/00* (2006.01)    *G06T 5/40* (2006.01)
*G06T 7/00* (2017.01)    *H04N 13/00* (2006.01)

(21) Application number: **15186176.2**

(22) Date of filing: **22.09.2015**

(54) **METHOD AND APPARATUS FOR GENERATING DISPARITY MAP BASED ON IMAGE FRAMES PHOTOGRAPHED BY STEREO CAMERA**

VERFAHREN UND VORRICHTUNG ZUR ERZEUGUNG EINER DISPARITÄTSKARTE AUF BASIS VON BILDERN, DIE VON EINER STEREOKAMERA AUFGENOMMEN WERDEN

PROCÉDÉ ET APPAREIL DE GÉNÉRATION DE CARTE DE DISPARITÉ BASÉE SUR DES TRAMES D'IMAGE PHOTOGRAPHIÉES PAR UNE CAMÉRA STÉRÉO

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **28.09.2014 CN 201410510752**

(43) Date of publication of application:
**30.03.2016 Bulletin 2016/13**

(73) Proprietor: **Ricoh Company, Ltd.**
**Tokyo 143-8555 (JP)**

(72) Inventors:
• **YOU, Ganmei**
  **Beijing 100044 (CN)**
• **LIU, Dianchao**
  **Beijing 100044 (CN)**
• **YANG, Tianyu**
  **Beijing 100044 (CN)**
• **LU, Yaojie**
  **Beijing 100044 (CN)**
• **SHI, Zhongchao**
  **Beijing 100044 (CN)**

(74) Representative: **Maury, Richard Philip**
**Marks & Clerk LLP**
**90 Long Acre**
**London WC2E 9RA (GB)**

(56) References cited:
**JP-A- 2014 127 151**

• **GAURAV SHARMA ET AL: "Select Trends in Image, Video, and Multidimensional Signal Processing [In the Spotlight]", IEEE SIGNAL PROCESSING MAGAZINE, IEEE SERVICE CENTER, PISCATAWAY, NJ, US, vol. 29, no. 1, January 2012 (2012-01), pages 174-176, XP011389810, ISSN: 1053-5888, DOI: 10.1109/MSP.2011.943130**
• **NARANJO V ET AL: "Flicker reduction in old films", IMAGE PROCESSING, 2000. PROCEEDINGS. 2000 INTERNATIONAL CONFERENCE ON SEPTEMBER 10-13, 2000, IEEE, PISCATAWAY, NJ, USA, 10 September 2000 (2000-09-10), pages 657-659 vol.2, XP031534539, ISBN: 978-0-7803-6297-0**

**Description**

**BACKGROUND OF THE INVENTION**

**1. Field of the Invention**

The present invention relates to a method and an apparatus for generating a disparity map, and specifically, a method and an apparatus for generating a disparity map based on image frames photographed by a stereo camera.

**2. Description of the Related Art**

With the technical development of three-dimensional reconstruction and virtual reality, disparity information for indicating a distance between a camera and a photographed specific object has been widely used in applications such as driving assistance. By performing image matching between a standard image and a reference image photographed in the same scene by a stereo camera, a pair of matched pixels can be found in the standard image and the reference image, and disparities corresponding to coordinates of the pixels can be calculated. Thus, three-dimensional spatial information of the scene can be specified accurately by using the disparities.

JP2014-127151 discloses an imaging device including a first camera and a second camera, a shot-image data acquirer, a correcting section for aligning the distribution of the luminance value between the two images, a correction table managing section, a correction table storage and a depth image generator. Gaurav Sharma et al.: "Select Trends in Image, Video and Multidimensional Signal Processing [In the Spotlight]", IEEE SIGNAL PROCESSING MAGAZINE, IEEE SERVICE CENTER, PISCATAWAY, NJ, US, vol. 29, no. 1, January 2012 (2012-01), pages 174-176, XP011389810, ISSN: 1053-588, DOI: 10/1109/MSP.2011.943130 discusses trends in 3D video processing and the analysis of signals that can be represented as graphs.

Naranjo V et al.: "Flicker reduction in old films", IMAGE PROCESSING, 2000. Proceedings. 2000 International Conference on September 10-13, 2000, IEEE, PISCATAWAY, NJ, USA, 10 September 2000 (2000-09-10), pages 657-659 vol. 2, XP031534539, ISBN: 978-0-7803-6297-0 deals with the reduction of flicker in old films by correcting the mean and variance parameters of a sequence.

**SUMMARY OF THE INVENTION**

The present invention has an object to provide a method and an apparatus for generating a disparity map based on image frames photographed by a stereo camera that can solve a problem of excessive enhancement by performing weighting and generating target histograms based on enhanced histograms of a historical frame.

According to the present invention, a method according to claim 1 and an apparatus according to claim 4 are defined. According to the method and apparatus for generating a disparity map based on image frames photographed by a stereo camera, mapping is performed for pixels in predetermined regions of a standard image and a reference image in an image frame photographed at a current timing by the stereo camera, by using a mapping function calculated based on historical information and current information of the image frames photographed by the stereo camera; thus, an enhanced standard image and an enhanced reference image for obtaining an accurate disparity map can be easily obtained, so that the accurate disparity map can be obtained based on the enhanced standard image and the enhanced reference image and more effective information can be provided to a user.

**BRIEF DESCRIPTION OF THE DRAWINGS**

FIG. 1 is a flowchart illustrating a method of generating a disparity map based on image frames photographed by a stereo camera according to an embodiment of the present invention;
FIG. 2 is a pixel distance histogram according to an embodiment of the present invention;
FIG. 3 is a flowchart illustrating a method of generating a target standard grayscale histogram and a target reference grayscale histogram based on historical information of a second image frame according to an embodiment of the present invention;
FIG. 4 is a structural block diagram illustrating an apparatus for generating a disparity map based on image frames photographed by a stereo camera according to an embodiment of the present invention;
FIG. 5 is a structural block diagram illustrating a function calculation unit according to an embodiment of the present invention; and
FIG. 6 is an overall hardware block diagram illustrating a disparity map generation hardware system 600 according to an embodiment of the present invention.

## DETAILED DESCRIPTION OF THE PREFERRED EMBODIMENTS

In the following, embodiments of the present invention are described in detail with reference to the accompanying drawings, so as to facilitate the understanding of the present invention. It should be noted that, in the present specification and the accompanying drawings, the basically same steps and elements are represented by the same symbols, and duplicate description of those steps and elements will be omitted.

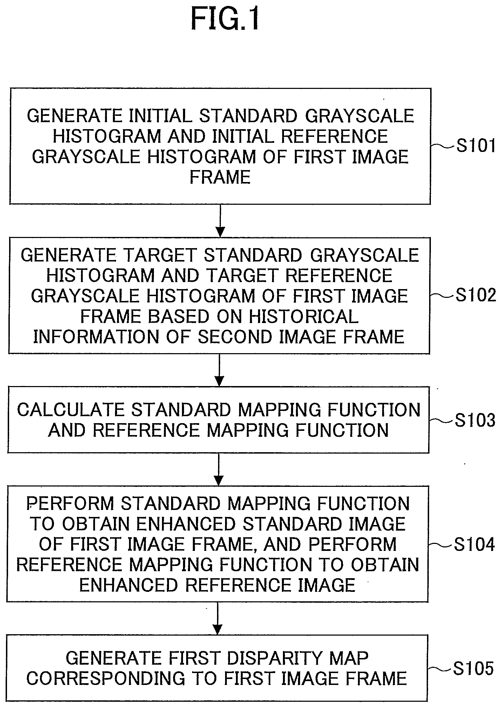

FIG. 1 is a flowchart illustrating a method of generating a disparity map based on image frames photographed by a stereo camera according to an embodiment of the present invention. In the following, the method of generating the disparity map based on the image frames photographed by the stereo camera (hereafter, abbreviated as the "disparity map generation method") according to the embodiment of the present invention will be described with reference FIG. 1. Each of the image frames photographed by the stereo camera includes a standard image and a reference image. The standard image in each of the image frames is a left-eye image photographed by a binocular camera and the reference image in each of the image frames is a right-eye image photographed by the binocular camera.

As illustrated in FIG. 1, in step S101, an initial standard grayscale histogram is generated based on a predetermined region of a first standard image of a first image frame, and an initial reference grayscale histogram is generated based on a predetermined region of a first reference image of the first image frame, the first image frame being an image frame photographed by the stereo camera at a first timing. As an example of the present invention, the first timing may be current time, and the first image frame may be a current image frame photographed with the stereo camera. Furthermore, in step S101, the initial standard grayscale histogram may be generated based on grayscale values of pixels in the predetermined region of the first standard image, and similarly, the initial reference grayscale histogram may be generated based on grayscale values of pixels in the predetermined region of the first reference image. In the embodiment of the present invention, the ordinates of the grayscale histogram may represent the number of the pixels and the abscissas of the grayscale histogram may represent the grayscale values; and alternatively, the ordinates and the abscissas may also be reversed.

Additionally, the predetermined region may be a portion in the first standard image, and alternatively, the predetermined region may also be all of the first standard image. Preferably, the determined region may be a region in a standard image or a reference image of an image frame where a target object (such as a travelling vehicle) photographed by the stereo camera is located. For example, the predetermined region may be determined, based on motion information of the target object obtained by previously tracking the target object. As another example, predetermined regions may be determined based on motion information of the target object in the standard image and the reference image, respectively; and alternatively, a predetermined region may be determined based on motion information of the target object in one of the standard image and the reference image, and a corresponding region in the other image may be determined as the predetermined region in the other image.

In step S102, a target standard grayscale histogram of the predetermined region of the first standard image and a target reference grayscale histogram of the predetermined region of the first reference image are generated based on historical information of a second image frame, the second image frame being an image frame photographed by the stereo camera at a timing before the first timing. The historical information includes grayscale histograms generated based on a standard image and a reference image in the second image frame, and the grayscale histograms will be described below in detail. It should be noted that, step S101 and step S102 may not be performed in the order illustrated in FIG. 1. Step S101 and step S102 may be performed reversely or in parallel.

And then, in step S103, a standard mapping function from the initial standard grayscale histogram to the target standard grayscale histogram is calculated, and a reference mapping function from the initial reference grayscale histogram to the target reference grayscale histogram is calculated. As an example of the present invention, histogram equalization may be performed for the initial standard grayscale histogram of the first image frame obtained in step S101, to obtain a mapping function G(p) from the initial standard grayscale histogram of the first image frame to the equalized or basically equalized standard grayscale histogram E of the first image frame; and histogram equalization may be performed for the target standard grayscale histogram of the first image frame obtained in step S102, to obtain a mapping function F(p) from the target standard grayscale histogram of the first image frame to the equalized or basically equalized standard grayscale histogram E of the first image frame. And then, a standard mapping function D(p) from the initial standard grayscale histogram to the target standard grayscale histogram may be calculated based on the following formula (1).

$$D(\mathrm{p}) = F^{-1}(G(p)) \tag{1}$$

Additionally, the reference mapping function from the initial reference grayscale histogram to the target reference grayscale histogram may be calculated based on a method similar to the method of calculating the standard mapping function.

And then, in step S104, the standard mapping function is performed for the predetermined region of the first standard image to obtain an enhanced standard image of the first image frame, and the reference mapping function is performed for the predetermined region of the first reference image to obtain an enhanced reference image of the first image frame. Specifically, in step S104, an enhanced grayscale value of each of the pixels in the predetermined region of the first standard image may be obtained by substituting a grayscale value of the pixel into the standard mapping function to perform grayscale mapping. And then, the enhanced standard image of the first image frame is generated based on the obtained enhanced grayscale values of the pixels. Additionally, the enhanced reference image of the first image frame may be generated based on a method similar to a method of generating the enhanced standard image of the first image frame. By comparing grayscale values after a grayscale mapping with original grayscale values of the pixels in the first standard image and the first reference image directly photographed by the stereo camera, accurate disparity values can be easily calculated based on the enhanced grayscale values of the pixels in the enhanced standard image and the enhanced reference image.

Finally, in step S105, a first disparity map corresponding to the first image frame is generated based on the enhanced standard image and the enhanced reference image of the first image frame. Disparity values may be obtained by using any known method based on a standard image and a reference image, and the disparity map corresponding to the predetermined region in the first image frame may be generated based on the obtained disparity values. For example, for each pixel p in the enhanced standard image, comparison between grayscale value of the pixel p and grayscale value of each pixel p' with the same abscissa in the enhanced reference image may be performed, the pixel p' whose the grayscale value is most similar to the grayscale value of the pixel p is selected as a matching point, and the disparity value of the pixel p is calculated based on the abscissa of the pixel p and the abscissa of the matching point.

The method of generating the disparity map according to the embodiment of the present invention is described above with reference to FIG. 1. Additionally, the historical information of the second image frame used in step S102 includes a weight of the second image frame, an enhanced standard grayscale histogram generated based on the previously stored enhanced standard image of the second image frame, and an enhanced reference grayscale histogram generated based on the previously stored enhanced reference image of the second image frame. For example, the enhanced standard image and the enhanced reference image of the second image frame may be generated by steps S101 to S104 in the disparity map generation method illustrated in FIG. 1 and stored, when the second image frame is a current image frame photographed by the stereo camera at the current time.

Additionally, in step S102, the weight of the second image frame is determined, based on a ratio of the number of pixels in the second image frame whose disparity values are reliable to the total number of pixels in the second image frame. A performance factor of the second image frame serves as the weight of the second image frame, and the performance factor $Q_m$ is calculated based on the following formula (2),

$$Q_m = P_m * R_m \qquad (2)$$

where $P_m$ is the number of the pixels in the predetermined region of the second image frame whose disparity values are reliable, and $R_m$ is the ratio of the number of the pixels in the predetermined region of the second image frame whose disparity values are reliable to the total number of the pixels in the predetermined region of the second image frame.

Specifically, a second disparity map corresponding to the second image frame may be generated based on the enhanced standard image and the enhanced reference image of the second image frame, and the number $P_m$ of the pixels in the predetermined region of the second image frame whose disparity values are reliable may be determined based on the second disparity map, according to step S105 in the disparity map generation method illustrated in FIG. 1.

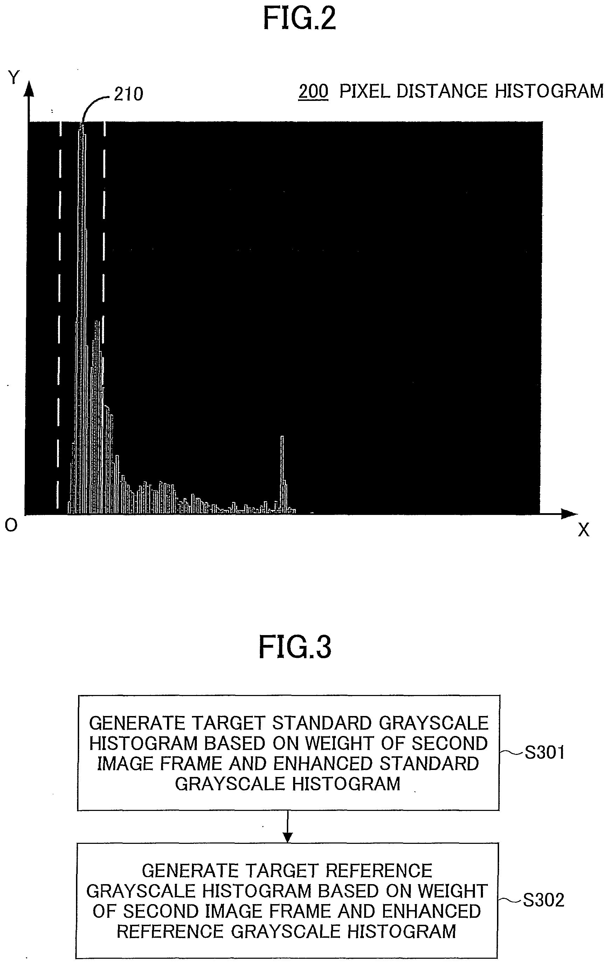

Preferably, distances corresponding to disparities may be calculated based on the disparities of pixels specified by the second disparity map, and a pixel distance histogram may be generated based on the calculated distances, the distances corresponding to disparities referring to distances between an object in an actual scene that corresponds to the pixels and the stereo camera. FIG. 2 is a pixel distance histogram according to an embodiment of the present invention. As illustrated in FIG. 2, in the pixel distance histogram 200, vertical axis Y represents the number of the pixels and horizontal axis X represents the distance corresponding to the disparity. A peak distance 210 may be determined in the pixel distance histogram 200, the disparities corresponding to the distances (for example, distances between two dotted lines in FIG. 2) whose difference between the distance and the peak distance is less than or equal to a predetermined distance threshold (for example, 1 m) may serve as reliable disparities, and the number of the pixels whose difference between the distance and the peak distance is less than or equal to the predetermined distance threshold may serve as the number $P_m$ of the pixels with a reliable disparity value.

As another example, the weight of the second image frame may be determined, based on a time interval between the second image frame and the first image frame. For example, a time factor of the second image frame may serve as the weight of the image frame, and the time factor $T_m$ of the image frame may be calculated according to the following formula (3),

$$T_m = (t - m)^{-\alpha} \qquad (3)$$

where t is a serial number of the first image frame, m is a serial number of the second image frame, $\alpha$ is a constant between 0 and 1, and $\alpha$ may be set to 0.5. The smaller the time interval between the second image frame and the first image frame is, the larger the weight is; and the larger the time interval is, the smaller the weight is.

Additionally, the weight of the second image frame may be determined based on a performance factor and a time factor of the second image frame. For example, the weight $W_m$ of the second image frame may be calculated according to the following formula (4).

$$W_m = Q_m * T_m \qquad (4)$$

FIG. 3 is a flowchart illustrating a method of generating a target standard grayscale histogram and a target reference grayscale histogram based on historical information of a second image frame according to an embodiment of the present invention. As illustrated in FIG. 3, in step S301, the target standard grayscale histogram is generated based on the weight of the second image frame and the enhanced standard grayscale histogram. As an example of the present invention, the target standard grayscale histogram may be generated based on bins in the enhanced standard grayscale histogram of the second image frame.

For example, the target standard grayscale histogram $H_{target}^t$ of the predetermined region of the first standard image may be calculated according to the following formula (5),

$$H_{target}^t = \{ h_n^t \mid n = 1, \ldots, N \}$$

$$h_n^t = \frac{\sum_{m=t-1}^{t-M} W_m * h_n^m}{\sum_{m=t-1}^{t-M} W_m} \qquad (5)$$

where N is a positive integer greater than 1, $h_n^t$ is a value of a n-th bin in the target standard grayscale histogram $H_{target}^t$, M is a positive integer greater than or equal to 1 and refers to the number of the second image frames for calculating the target standard grayscale histogram $H_{target}^t$. In order to increase the accuracy, preferably, the target standard grayscale histogram may be generated based on the enhanced standard grayscale histograms of a plurality of (for example, five) second image frames.

In step S302, the target reference grayscale histogram is generated based on the weight of the second image frame and the enhanced reference grayscale histogram. The target reference grayscale histogram may be calculated by a method similar to the method of calculating the target standard grayscale histogram. It should be noted that, step S301 and step S302 may not be performed in the order illustrated in FIG. 3. Step S301 and step S302 may be performed reversely or in parallel.

Additionally, as another example of the present invention, after the target reference grayscale histogram is generated in step S102, the disparity map generation method illustrated in FIG. 1 may include storing the enhanced standard image, the enhanced reference image and the first disparity map of the first image frame to generate a third disparity map corresponding to a third image frame, the third image frame being an image frame photographed by the stereo camera at a timing after the first timing. That is to say, the calculated enhanced standard image, the enhanced reference image and the first disparity map of the first image frame may be stored as historical information for calculating a disparity map of a next frame.

By the disparity map generation method according to the embodiment of the present invention, mapping is performed for pixels in predetermined regions of a standard image and a reference image in an image frame photographed at a current timing by the stereo camera, by using a mapping function calculated based on historical information and current information of the image frames photographed by the stereo camera; thus, an enhanced standard image and an enhanced reference image for obtaining an accurate disparity map can be easily obtained, so that the accurate disparity map can be obtained based on the enhanced standard image and the enhanced reference image and more effective information can be provided to a user.

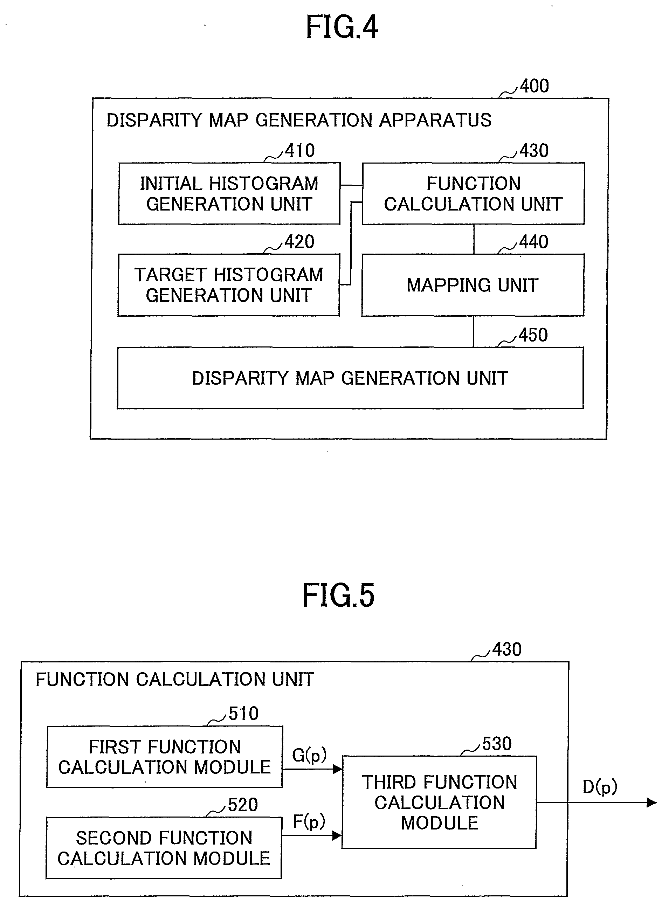

In the following, an apparatus for generating a disparity map based on image frames photographed by a stereo camera according to an embodiment of the present invention will be described with reference to FIG. 4. FIG. 4 is a structural block diagram illustrating the apparatus for generating a disparity map (hereafter, abbreviated as the "disparity map generation apparatus") 400 based on image frames photographed by a stereo camera according to an embodiment of the present invention. As illustrated in FIG. 4, the disparity map generation apparatus 400 according to the embodiment includes an initial histogram generation unit 410, a target histogram generation unit 420, a function calculation unit 430, a mapping unit 440 and a disparity map generation unit 450. The units of the disparity map generation apparatus 400 may perform the steps or functions of the disparity map generation method of FIG. 1, respectively. Thus, only main members of the disparity map generation apparatus 400 will be described below, and the contents that have been described with reference to FIG. 1 will be omitted. The initial histogram generation unit 410 generates an initial standard grayscale histogram based on a predetermined region of a first standard image of a first image frame, and generates an initial reference grayscale histogram based on a predetermined region of a first reference image of the first image frame, the first image frame being an image frame photographed by the stereo camera at a first timing. As an example of the present invention, the first image frame may be a current image frame photographed by the stereo camera, and the first timing may be current time. The initial standard grayscale histogram may be generated based on grayscale values of pixels in the predetermined region of the first standard image, and similarly, the initial reference grayscale histogram may be generated based on grayscale values of pixels in the predetermined region of the first reference image.

As described above, the predetermined region may be a portion in the first standard image, and alternatively, the predetermined region may also be all of the first standard image. Preferably, the determined region may be a region in a standard image or a reference image of an image frame where a target object (such as a travelling vehicle) photographed by the stereo camera is located. For example, the predetermined region may be determined, based on motion information of the target object obtained by previously tracking the target object. As another example, predetermined regions may be determined based on motion information of the target object in the standard image and the reference image, respectively; and alternatively, a predetermined region may be determined based on motion information of the target object in one of the standard image and the reference image, and a corresponding region in the other image may be determined as the predetermined region in the other image.

The target histogram generation unit 420 generates a target standard grayscale histogram of the predetermined region of the first standard image and a target reference grayscale histogram of the predetermined region of the first reference image, based on historical information of a second image frame, the second image frame being an image frame photographed by the stereo camera at a timing before the first timing. The historical information includes grayscale histograms generated based on a standard image and a reference image in the second image frame, and the grayscale histograms will be described below in detail.

The function calculation unit 430 calculates a standard mapping function from the initial standard grayscale histogram to the target standard grayscale histogram, and calculates a reference mapping function from the initial reference grayscale histogram to the target reference grayscale histogram. FIG. 5 is a structural block diagram illustrating a function calculation unit 430 according to an embodiment of the present invention. As illustrated in FIG. 5, the function calculation unit 430 may include a first function calculation module 510, a second function calculation module 520 and a third function calculation module 530. Specifically, the first function calculation module 510 may perform histogram equalization for the initial standard grayscale histogram of the first image frame to obtain a mapping function G(p) from the initial standard grayscale histogram of the first image frame to the equalized standard grayscale histogram E of the first image frame. The second function calculation module 520 may perform histogram equalization for the target standard grayscale histogram of the first image frame to obtain a mapping function F(p) from the target standard grayscale histogram of the first image frame to the equalized standard grayscale histogram E of the first image frame. And then, the third function calculation module 530 may calculate a standard mapping function D(p) from the initial standard grayscale histogram to the target standard grayscale histogram according to the above formula (1). Additionally, the first function calculation module 510, the second function calculation model 520 and the third function calculation model 530 may calculate the reference mapping function from the initial reference grayscale histogram to the target reference grayscale histogram by a method similar to the method of calculating the standard mapping function.

The mapping unit 440 performs the standard mapping function for the predetermined region of the first standard image to obtain an enhanced standard image of the first image frame, and performs the reference mapping function for the predetermined region of the first reference image to obtain an enhanced reference image of the first image frame.

Specifically, the mapping unit 440 may obtain an enhanced grayscale value of each of the pixels in the predetermined region of the first standard image by substituting a grayscale value of the pixel into the standard mapping function to perform grayscale mapping, obtain the enhanced grayscale values of the pixels, and generate the enhanced standard image of the first image frame based on the obtained enhanced grayscale values of the pixels. Additionally, the mapping unit 440 may generate the enhanced reference image of the first image frame based on a method similar to a method of generating the enhanced standard image of the first image frame. By comparing grayscale values after a grayscale mapping by the mapping unit 440 with original grayscale values of the pixels in the first standard image and the first reference image directly photographed by the stereo camera, accurate disparity values can be easily calculated based on the enhanced grayscale values of the pixels in the enhanced standard image and the enhanced reference image.

Finally, the disparity map generation unit 450 generates a first disparity map corresponding to the first image frame, based on the enhanced standard image and the enhanced reference image of the first image frame. Disparity values may be obtained by using any known method based on a standard image and a reference image, and the disparity map corresponding to the predetermined region in the first image frame may be generated based on the obtained disparity values. For example, for each pixel p in the enhanced standard image, the disparity map generation unit 450 may perform comparison between grayscale value of the pixel p and grayscale value of each pixel p' with the same abscissa in the enhanced reference image, select the pixel p' whose the grayscale value is most similar to the grayscale value of the pixel p as a matching point, and calculate the disparity value of the pixel p based on the abscissa of the pixel p and the abscissa of the matching point.

The apparatus of generating the disparity map according to the embodiment of the present invention is described above with reference to FIG. 4. The disparity map generation apparatus 400 may include a storage unit for storing the historical information of the second image frame. As described above, the historical information of the second image frame includes a weight of the second image frame, an enhanced standard grayscale histogram generated based on the previously stored enhanced standard image of the second image frame, and an enhanced reference grayscale histogram generated based on the previously stored enhanced reference image of the second image frame.

Additionally, the target histogram generation unit 420 determines the weight of the second image frame, based on a ratio of the number of pixels in the second image frame whose disparity values are reliable to the total number of pixels in the second image frame. As described above, the target histogram generation unit 420 determines the weight of the second image frame, based on a performance factor and, optionally, based on a time factor of the second image frame. Additionally, the target histogram generation unit 420 generates the target standard grayscale histogram based on the weight of the second image frame and the enhanced standard grayscale histogram. For example, the target histogram generation unit 420 may calculate the target standard grayscale histogram of the predetermined region of the first standard image according to the above formula (5). Similarly, the target histogram generation unit 420 generates the target reference grayscale histogram based on the weight of the second image frame and the enhanced reference grayscale histogram.

Additionally, after the disparity map is generated by the disparity map generation unit 450, the storage unit may store the enhanced standard image, the enhanced reference image and the first disparity map of the first image frame to generate a third disparity map corresponding to a third image frame, the third image frame being an image frame photographed by the stereo camera at a timing after the first timing. That is to say, the storage unit may store the calculated enhanced standard image, the enhanced reference image and the first disparity map of the first image frame as historical information for calculating a disparity map of a next frame.

According to the apparatus for generating a disparity map based on image frames photographed by a stereo camera, mapping is performed for pixels in predetermined regions of a standard image and a reference image in an image frame photographed at a current timing by the stereo camera, by using a mapping function calculated based on historical information and current information of the image frames photographed by the stereo camera; thus, an enhanced standard image and an enhanced reference image for obtaining an accurate disparity map can be easily obtained, so that the accurate disparity map can be obtained based on the enhanced standard image and the enhanced reference image and more effective information can be provided to a user.

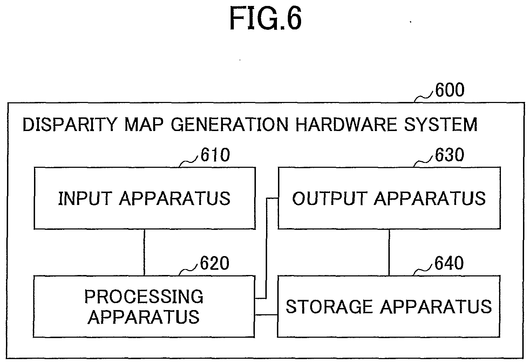

In addition, the present invention may also be implemented as a hardware system for generating a disparity map based on image frames photographed by a stereo camera (hereafter, abbreviated as the "disparity map generation hardware system"). FIG. 6 is an overall hardware block diagram illustrating a disparity map generation hardware system 600 according to an embodiment of the present invention. As illustrated in FIG. 6, the disparity map generation hardware system 600 may include: an input apparatus 610 for inputting images or information from the outside such as image frames photographed by a stereo camera, parameters of the stereo camera or original disparity maps, for example, including a keyboard, a mouse, a communication network and a remote input device connected thereto, etc.; a processing apparatus 620 for implementing the above disparity map generation method according to the embodiments of the present invention, such as CPU of a computer or other chips having processing ability, etc., which are connected to a network such as the Internet (not shown) to transmit the processed images to the remote as needed; an output apparatus 630 for outputting results obtained by implementing the disparity map generation method to the outside, such as a screen, a printer, a communication network and a remote output device connected thereto, etc.; and a storage apparatus 640 for storing the historical information such as the weight of the second image frame, the enhanced standard image of the second image frame and the enhanced reference image of the second image frame, by a volatile method or a nonvolatile method, such as various kinds of volatile or nonvolatile memory including a random-access memory (RAM), a read-only memory (ROM), a hard disk and a semiconductor memory.

The present invention may be implemented as a system, an apparatus, a method or a computer program product. Therefore, the present invention may be specifically implemented as hardware, software (including firmware, resident software, micro-code, etc.) a combination of hardware and software, which is referred to as "circuit", "module", "apparatus" or "system". Additionally, the present invention may also be implemented as a computer program product in one or more computer-readable media, and the computer-readable media include computer-readable computer codes.

Any combinations of one or more computer-readable media may be used. The computer-readable medium may be a computer-readable signal medium or a computer-readable storage medium. The computer-readable storage medium may be, for example, a system, apparatus or an electric, magnetic, optical, electromagnetic, infrared or semiconductor element, or a combination of any of the above, but is not limited to them. Specifically, the computer-readable storage medium may include a single electrical connection having a plurality of wires, a portable computer disk, a hard disk, a random access memory (RAM), a read-only memory, an erasable programmable read-only memory (an EPROM or a Flash memory), an optical fiber, a portable compact disc read-only memory (CD-ROM), an optical memory device, a magnetic storage device, or a suitable combination of any of the above. In the present specification, the computer-readable storage medium may include a tangible medium including or storing a program, and the program may be used by an instruction execution system, apparatus, device or a combination thereof.

The computer-readable signal medium may include data signals to be propagated as a part of a carrier wave, where computer-readable program codes are loaded. The propagated data signals may be electromagnetic signals, optical signals or a suitable combination thereof, but are not limited to these signals. The computer-readable medium may also be any computer-readable medium except the computer-readable storage medium, the computer-readable medium may send, propagate or transmit a program used by an instruction execution system, apparatus, device or a combination thereof.

The program codes included in the computer-readable medium may be transmitted by any transmission media, such as wireless, wire, optical cable, RF or any combinations thereof.

The computer program codes for executing the operation of the present invention may be written in one or more programming languages or a combination thereof. The programming languages include an object-oriented language such as JAVA, Smalltalk, C++, and a procedural programming language such as C or similar programming languages. The program codes may be executed on a user's computer completely or partly, be executed as an independent software package, be executed on a user's computer partly and a remote computer partly, or be executed on a remote computer or server completely. The remote computer may be connected to the user's computer via any network such as a local area network (LAN) or a wide area network (WAN), or may be connected to an external computer (for example by the Internet provided by an Internet service provider).

The present invention is described with reference to the flowcharts and/or block diagrams of the method, apparatus (system) and computer program products according to the embodiments of the present invention. It should be noted that, each block and a combination of the blocks in the flowcharts and/or the block diagrams may be implemented by computer program instructions. The computer program instructions may be provided to a processor of a general-purpose computer, a special-purpose computer or another programmable data processing apparatus, and the computer program instructions are executed by the computer or other programmable data processing apparatus to implement functions/operations in the flowcharts and/or the block diagrams.

The computer program instructions may also be stored in the computer-readable medium for making the computer or other programmable data processing apparatuses operate in a specific manner, and the instructions stored in the computer-readable medium may generate an instruction means for implementing the functions/operations in the flowcharts and/or the block diagrams.

The computer program codes may also be loaded on the computer, other programmable data processing apparatuses or other devices, so as to execute a series of operation steps in the computer, other programmable data processing apparatuses or other devices, so that the instructions executed in the computer or other programmable apparatuses can provide a process for implementing the functions/operations in the flowcharts and/or block diagrams.

The available system structure, functions and operations of the system, method and computer program product according to the present invention are illustrated by the flowcharts and block diagrams in the drawings. Each of the blocks in the flowcharts or block diagrams represents a module, program segment or a part of codes, and the module, program segment or the part of codes include one or more executable instructions for implementing logic functions.

It should be noted that the scope of the invention is limited only by the appended claims.

**Claims**

1. A method of generating a disparity map based on image frames photographed by a stereo camera, each of the image frames including a left-eye image and a right-eye image, the method comprising:

   generating, based on a predetermined region of a first left-eye image of a first image frame, an initial left-eye grayscale histogram, and generating, based on a predetermined region of a first right-eye image of the first image frame, an initial right-eye grayscale histogram (S101), the first image frame being an image frame photographed by the stereo camera at a first timing;
   generating, based on historical information of a second image frame, a target left-eye grayscale histogram of the predetermined region of the first left-eye image and a target right-eye grayscale histogram of the predetermined region of the first right-eye image (S102), the second image frame being an image frame photographed by the stereo camera at a timing before the first timing;
   calculating a left-eye mapping function from the initial left-eye grayscale histogram to the target left-eye grayscale histogram, and calculating a right-eye mapping function from the initial right-eye grayscale histogram to the target right-eye grayscale histogram (S103); performing the left-eye mapping function for the predetermined region of the first left-eye image to obtain an enhanced left-eye image of the first image frame, and performing the right-eye mapping function for the predetermined region of the first right-eye image to obtain an enhanced right-eye image of the first image frame (S104); generating, based on the enhanced left-eye image and the enhanced right-eye image of the first image frame, a first disparity map corresponding to the first image frame (S105); wherein
   the historical information of the second image frame includes a weight of the second image frame, an enhanced left-eye grayscale histogram generated based on the previously stored enhanced left-eye image of the second image frame, and an enhanced right-eye grayscale histogram generated based on the previously stored enhanced right-eye image of the second image frame, and
   generating, based on the historical information of the second image frame, the target left-eye grayscale histogram of the predetermined region of the first left-eye image and the target right-eye grayscale histogram of the predetermined region of the first right-eye image (S102) includes generating, based on the weight of the second image frame and the enhanced left-eye grayscale histogram, the target left-eye grayscale histogram (S301), and generating, based on the weight of the second image frame and the enhanced right-eye grayscale histogram, the target right-eye grayscale histogram (S302); and the method **characterized by**:

      determining, based on a ratio of the number of pixels in a predetermined region of the second image frame whose disparity values are reliable to the total number of pixels in the predetermined region of the second image frame, the weight of the second image frame.

2. The method of generating a disparity map according to claim 1, the method further comprising:

   determining, based on a time interval between the second image frame and the first image frame, the weight of the second image frame, wherein the smaller the time interval between the second image frame and the first image frame is, the larger the weight is and the larger the time interval is, the smaller the weight is.

3. The method of generating a disparity map according to claim 1, the method further comprising:

   storing the enhanced left-eye image, the enhanced right-eye image and the first disparity map of the first image frame to generate a third disparity map corresponding to a third image frame, the third image frame being an image frame photographed by the stereo camera at a timing after the first timing.

4. An apparatus for generating a disparity map (400) based on image frames photographed by a stereo camera, each of the image frames including a left-eye image and a right-eye image, the apparatus comprising:

   an initial histogram generation unit (410) configured to generate, based on a predetermined region of a first left-eye image of a first image frame, an initial left-eye grayscale histogram, and generate, based on a predetermined region of a first right-eye image of the first image frame, an initial right-eye grayscale histogram, the first image frame being an image frame photographed by the stereo camera at a first timing;
   a target histogram generation unit (420) configured to generate, based on historical information of a second image frame, a target left-eye grayscale histogram of the predetermined region of the first left-eye image and a target right-eye grayscale histogram of the predetermined region of the first right-eye image, the second image frame being an image frame photographed by the stereo camera at a timing before the first timing;

a function calculation unit (430) configured to calculate a left-eye mapping function from the initial left-eye grayscale histogram to the target left-eye grayscale histogram, and calculate a right-eye mapping function from the initial right-eye grayscale histogram to the target right-eye grayscale histogram;

a mapping unit (440) configured to perform the left-eye mapping function for the predetermined region of the first left-eye image to obtain an enhanced left-eye image of the first image frame, and perform the right-eye mapping function for the predetermined region of the first right-eye image to obtain an enhanced right-eye image of the first image frame; and

a disparity map generation unit (450) configured to generate, based on the enhanced left-eye image and the enhanced right-eye image of the first image frame, a first disparity map corresponding to the first image frame; wherein

the historical information of the second image frame includes a weight of the second image frame, an enhanced left-eye grayscale histogram generated based on the previously stored enhanced left-eye image of the second image frame, and an enhanced right-eye grayscale histogram generated based on the previously stored enhanced right-eye image of the second image frame, and

the target histogram generation unit (420) generates, based on the weight of the second image frame and the enhanced left-eye grayscale histogram, the target left-eye grayscale histogram, and generates, based on the weight of the second image frame and the enhanced right-eye grayscale histogram, the target right-eye grayscale histogram; and the apparatus **characterized in that** the target histogram generation unit (420) determines, based on a ratio of the number of pixels in a predetermined region of the second image frame whose disparity values are reliable to the total number of pixels in the predetermined region of the second image frame, the weight of the second image frame.

5. The apparatus for generating a disparity map according to claim 4, wherein

the target histogram generation unit (420) determines, based on a time interval between the second image frame and the first image frame, the weight of the second image frame, wherein the smaller the time interval between the second image frame and the first image frame is, the larger the weight is and the larger the time interval is, the smaller the weight is.

6. The apparatus for generating a disparity map according to claim 4, the apparatus further comprising:

a storage unit configured to store the enhanced left-eye image, the enhanced right-eye image and the first disparity map of the first image frame to generate a third disparity map corresponding to a third image frame, the third image frame being an image frame photographed by the stereo camera at a timing after the first timing.

## Patentansprüche

1. Verfahren zur Erzeugung einer Disparitätskarte auf Basis von Einzelbildern, die von einer Stereokamera fotografiert werden, wobei jedes von den Einzelbildern ein Linksbild und ein Rechtsbild beinhaltet, wobei das Verfahren umfasst:

Erzeugen eines Links-Graustufenausgangshistogramms auf Basis einer vorgegebenen Region eines ersten Linksbildes eines ersten Einzelbildes und Erzeugen eines Rechts-Graustufenausgangshistogramms auf Basis einer vorgegebenen Region eines ersten Rechtsbildes des ersten Einzelbildes (S101),

wobei das erste Einzelbild ein Einzelbild ist, das von der Stereokamera zu einem ersten Zeitpunkt aufgenommen wird;

Erzeugen eines Links-Graustufenzielhistogramms der vorgegebenen Region des ersten Linksbildes und eines Rechts-Graustufenzielhistogramms der vorgegebenen Region des ersten Rechtsbildes (S102) auf Basis von historischen Informationen eines zweiten Einzelbildes,

wobei das zweite Einzelbild ein Einzelbild ist, das von der Stereokamera zu einem Zeitpunkt vor dem ersten Zeitpunkt aufgenommen worden ist;

Berechnen einer Linksabbildungsfunktion vom linken Graustufenausgangshistogramm auf das linke Graustufenzielhistogramm und Berechnen einer Rechtsabbildungsfunktion vom rechten Graustufenausgangshistogramm auf das rechte Graustufenzielhistogramm (S103);

Durchführen der Linksabbildungsfunktion für die vorgegebene Region des ersten Linksbildes, um ein verbessertes Linksbild des ersten Einzelbildes zu erhalten, und Durchführen der Rechtsabbildungsfunktion für die vorgegebene Region des ersten Rechtsbildes, um ein verbessertes Rechtsbild des ersten Einzelbildes zu erhalten (S104);

Erzeugen einer ersten Disparitätskarte, die dem ersten Einzelbild (S105) entspricht, auf Basis des verbesserten Linksbildes und des verbesserten Rechtsbildes des ersten Einzelbildes; wobei
die historischen Informationen des zweiten Einzelbildes ein Gewicht des zweiten Einzelbildes, ein verbessertes Links-Graustufenhistogramm, das auf Basis des zuvor gespeicherten verbesserten Linksbildes des zweiten Einzelbildes erzeugt wird, und ein verbessertes Rechts-Graustufenhistogramm, das auf Basis des zuvor gespeicherten verbesserten Rechtsbildes des zweiten Einzelbildes erzeugt wird, beinhalten, und
das Erzeugen des Links-Graustufenzielhistogramms der vorgegebenen Region des ersten Linksbildes und des Rechts-Graustufenzielhistogramms der vorgegebenen Region des ersten Rechtsbildes (S102) auf Basis der historischen Informationen des zweiten Einzelbildes beinhaltet:

Erzeugen des Links-Graustufenzielhistogramms (S301) auf Basis des Gewichtes des zweiten Einzelbildes und des verbesserten Links-Graustufenhistogramms und
Erzeugen des Rechts-Graustufenzielhistogramms (S302) auf Basis des Gewichtes des zweiten Einzelbildes und des verbesserten Rechts-Graustufenhistogramms, und das Verfahren **dadurch gekennzeichnet ist, dass**:

auf Basis eines Verhältnisses der Anzahl der Pixel in einer vorgegebenen Region des zweiten Einzelbildes, deren Disparitätswerte zuverlässig sind, zu der Gesamtzahl der Pixel in der vorgegebenen Region des zweiten Einzelbildes, das Gewicht des zweiten Einzelbildes bestimmt wird.

2. Verfahren zur Erzeugung einer Disparitätskarte nach Anspruch 1, wobei das Verfahren ferner umfasst:

Bestimmen des Gewichtes des zweiten Einzelbildes auf Basis eines Zeitabstands zwischen dem zweiten Einzelbild und dem ersten Einzelbild, wobei das Gewicht umso größer ist, je kleiner der Zeitabstand zwischen dem zweiten Einzelbild und dem ersten Einzelbild ist, und das Gewicht umso kleiner ist, je größer der Zeitabstand ist.

3. Verfahren zur Erzeugung einer Disparitätskarte nach Anspruch 1, wobei das Verfahren ferner umfasst:

Speichern des verbesserten Linksbildes, des verbesserten Rechtsbildes und der ersten Disparitätskarte des ersten Einzelbildes, um eine dritte Disparitätskarte zu erzeugen, die einem dritten Einzelbild entspricht, wobei das dritte Einzelbild ein Einzelbild ist, das von der Stereokamera zu einem Zeitpunkt nach dem ersten Zeitpunkt aufgenommen wird.

4. Vorrichtung zur Erzeugung einer Disparitätskarte (400) auf Basis von Einzelbildern, die von einer Stereokamera fotografiert werden, wobei jedes von den Einzelbildern ein Linksbild und ein Rechtsbild beinhaltet, wobei die Vorrichtung aufweist:

eine Ausgangshistogrammerzeugungseinheit (410), die dafür ausgelegt ist, auf Basis einer vorgegebenen Region eines ersten Linksbildes eines ersten Einzelbildes ein Links-Graustufenausgangshistogramm zu erzeugen und auf Basis einer vorgegebenen Region eines ersten Rechtsbildes des ersten Einzelbildes ein Rechts-Graustufenausgangshistogramm zu erzeugen, wobei das erste Einzelbild ein Einzelbild ist, das von der Stereokamera zu einem ersten Zeitpunkt fotografiert wird;
eine Zielhistogrammerzeugungseinheit (420), die dafür ausgelegt ist, auf Basis von historischen Informationen eines zweiten Einzelbildes ein Links-Graustufenzielhistogramm der vorgegebenen Region des ersten Linksbildes und ein Rechts-Graustufenzielhistogramm der vorgegebenen Region des ersten Rechtsbildes zu erzeugen, wobei das zweite Einzelbild ein Einzelbild ist, das von der Stereokamera zu einem Zeitpunkt vor dem ersten Zeitpunkt fotografiert wird;
eine Funktionsberechnungseinheit (430), die dafür ausgelegt ist, eine Linksabbildungsfunktion vom Links-Graustufenausgangshistogramm auf das Links-Graustufenzielhistogramm zu berechnen und eine Rechtsabbildungsfunktion vom Rechts-Graustufenausgangshistogramm auf das Rechts-Graustufenzielhistogramm zu berechnen;
eine Abbildungseinheit (440), die dafür ausgelegt ist, die Linksabbildungsfunktion für die vorgegebene Region des ersten Linksbildes durchzuführen, um ein verbessertes Linksbild des ersten Einzelbildes zu erhalten, und die Rechtsabbildungsfunktion für die vorgegebene Region des ersten Rechtsbildes durchzuführen, um ein verbessertes Rechtsbild des ersten Einzelbildes zu erhalten; und
eine Disparitätskartenerzeugungseinheit (450), die dafür ausgelegt ist, auf Basis des verbesserten Linksbildes und des verbesserten Rechtsbildes des ersten Einzelbildes eine erste Disparitätskarte zu erzeugen, die dem ersten Einzelbild entspricht; wobei

die historischen Informationen des zweiten Einzelbildes ein Gewicht des zweiten Einzelbildes, ein verbessertes Links-Graustufenhistogramm, das auf Basis des zuvor gespeicherten verbesserten Linksbildes des zweiten Einzelbildes erzeugt wird, und ein verbessertes Rechts-Graustufenhistogramm, das auf Basis des zuvor gespeicherten verbesserten Rechtsbildes des zweiten Einzelbildes erzeugt wird, beinhalten, und die Zielhistogrammerzeugungseinheit (420) auf Basis des Gewichtes des zweiten Einzelbildes und des verbesserten Links-Graustufenhistogramms das Links-Graustufenzielhistogramm erzeugt, und auf Basis des Gewichtes des zweiten Einzelbildes und des verbesserten Rechts-Graustufenhistogramms das Rechts-Graustufenzielhistogramm erzeugt; und die Vorrichtung **dadurch gekennzeichnet ist, dass** die Zielhistogrammerzeugungseinheit (420) auf Basis eines Verhältnisses der Anzahl der Pixel in einer vorgegebenen Region des zweiten Einzelbildes, deren Disparitätswerte zuverlässig sind, zu der Gesamtzahl der Pixel in der vorgegebenen Region des zweiten Einzelbildes, das Gewicht des zweiten Einzelbildes bestimmt.

5. Vorrichtung zur Erzeugung einer Disparitätskarte nach Anspruch 4, wobei
die Zielhistogrammerzeugungseinheit (420) auf Basis eines Zeitabstands zwischen dem zweiten Einzelbild und dem ersten Einzelbild das Gewicht des zweiten Einzelbildes bestimmt, wobei das Gewicht umso größer ist, je kleiner der Zeitabstand zwischen dem zweiten Einzelbild und dem ersten Einzelbild ist, und das Gewicht umso kleiner ist, je größer der Zeitabstand ist.

6. Vorrichtung zur Erzeugung einer Disparitätskarte nach Anspruch 4, wobei die Vorrichtung ferner aufweist:

eine Speichereinheit, die dafür ausgelegt ist, das verbesserte Linksbild, das verbesserte Rechtsbild und die erste Disparitätskarte des ersten Einzelbildes zu speichern, um eine dritte Disparitätskarte zu erzeugen, die einem dritten Einzelbild entspricht, wobei das dritte Einzelbild ein Einzelbild ist, das von der Stereokamera zu einem Zeitpunkt nach dem ersten Zeitpunkt phoaufgenommen wird.

**Revendications**

1. Procédé de génération d'une carte de disparité sur la base de trames d'image photographiées par une caméra stéréo, chacune des trames d'image comprenant une image d'oeil gauche et une image d'oeil droit, le procédé comprenant :

la génération, sur la base d'une région prédéterminée d'une première image d'oeil gauche d'une première trame d'image, d'un histogramme en échelle de gris d'oeil gauche initial, et la génération, sur la base d'une région prédéterminée d'une première image d'oeil droit de la première trame d'image, d'un histogramme en échelle de gris d'oeil droit initial (S101),
la première trame d'image étant une trame d'image photographiée par la caméra stéréo à un premier instant ;
la génération, sur la base des informations d'historique d'une deuxième trame d'image, d'un histogramme en échelle de gris d'oeil gauche cible de la région prédéterminée de la première image d'oeil gauche et d'un histogramme en échelle de gris d'oeil droit cible de la région prédéterminée de la première image d'oeil droit (S 102),
la deuxième trame d'image étant une trame d'image photographiée par la caméra stéréo à un instant avant le premier instant ;
le calcul d'une fonction de mappage d'oeil gauche de l'histogramme en échelle de gris d'oeil gauche initial vers l'histogramme en échelle de gris d'oeil gauche cible, et le calcul d'une fonction de mappage d'oeil droit de l'histogramme en échelle de gris d'oeil droit initial vers l'histogramme en échelle de gris d'oeil droit cible (S 103) ;
l'exécution de la fonction de mappage d'oeil gauche pour la région prédéterminée de la première image d'oeil gauche pour obtenir une image d'oeil gauche améliorée de la première trame d'image, et l'exécution de la fonction de mappage d'oeil droit pour la région prédéterminée de la première image d'oeil droit pour obtenir une image d'oeil droit améliorée de la première trame d'image (S 104) ;
la génération, sur la base de l'image d'oeil gauche améliorée et de l'image d'oeil droit améliorée de la première trame d'image, d'une première carte de disparité correspondant à la première trame d'image (S105) ; dans lequel les informations d'historique de la deuxième trame d'image comprennent un poids de la deuxième trame d'image, un histogramme en échelle de gris d'oeil gauche amélioré généré sur la base de l'image d'oeil gauche améliorée mémorisée précédemment de la deuxième trame d'image, et un histogramme en échelle de gris d'oeil droit amélioré généré sur la base de l'image d'oeil droit améliorée mémorisée précédemment de la deuxième trame d'image, et
la génération, sur la base des informations d'historique de la deuxième trame d'image, de l'histogramme en échelle de gris d'oeil gauche cible de la région prédéterminée de la première image d'oeil gauche et de l'histogramme en échelle de gris d'oeil droit cible de la région prédéterminée de la première image d'oeil droit (S 102) comprend :

la génération, sur la base du poids de la deuxième trame d'image et de l'histogramme en échelle de gris d'oeil gauche amélioré, de l'histogramme en échelle de gris d'oeil gauche cible (S301), et
la génération, sur la base du poids de la deuxième trame d'image et de l'histogramme en échelle de gris d'oeil droit amélioré, de l'histogramme en échelle de gris d'oeil droit cible (S302) ; et le procédé étant **caractérisé par** :

la détermination, sur la base d'un rapport entre le nombre de pixels dans une région prédéterminée de la deuxième trame d'image dont les valeurs de disparité sont fiables et le nombre total de pixels dans la région prédéterminée de la deuxième trame d'image, du poids de la deuxième trame d'image.

2. Procédé de génération d'une carte de disparité selon la revendication 1, le procédé comprenant en outre :

la détermination, sur la base d'un intervalle de temps entre la deuxième trame d'image et la première trame d'image, du poids de la deuxième trame d'image, dans lequel plus l'intervalle de temps est petit entre la deuxième trame d'image et la première trame d'image, plus le poids est grand, et plus l'intervalle de temps est grand, plus le poids est faible.

3. Procédé de génération d'une carte de disparité selon la revendication 1, le procédé comprenant en outre :

la mémorisation de l'image d'oeil gauche améliorée, de l'image d'oeil droit améliorée et de la première carte de disparité de la première trame d'image pour générer une troisième carte de disparité correspondant à une troisième trame d'image, la troisième trame d'image étant une trame d'image photographiée par la caméra stéréo à un instant après le premier instant.

4. Appareil pour générer une carte de disparité (400) sur la base de trames d'image photographiées par une caméra stéréo, chacune des trames d'image comprenant une image d'oeil gauche et une image d'oeil droit, l'appareil comprenant :

une unité de génération d'histogramme initial (410) configurée pour générer, sur la base d'une région prédéterminée d'une première image d'oeil gauche d'une première trame d'image, un histogramme en échelle de gris d'oeil gauche initial, et générer, sur la base d'une région prédéterminée d'une première image d'oeil droit de la première trame d'image, un histogramme en échelle de gris d'oeil droit initial, la première trame d'image étant une trame d'image photographiée par la caméra stéréo à un premier instant ;
une unité de génération d'histogramme cible (420) configurée pour générer, sur la base des informations d'historique d'une deuxième trame d'image, un histogramme en échelle de gris d'oeil gauche cible de la région prédéterminée de la première image d'oeil gauche et un histogramme en échelle de gris d'oeil droit cible de la région prédéterminée de la première image d'oeil droit, la deuxième trame d'image étant une trame d'image photographiée par la caméra stéréo à un instant avant le premier instant ;
une unité de calcul de fonction (430) configurée pour calculer une fonction de mappage d'oeil gauche de l'histogramme en échelle de gris d'oeil gauche initial vers l'histogramme en échelle de gris d'oeil gauche cible, et calculer une fonction de mappage d'oeil droit de l'histogramme en échelle de gris d'oeil droit initial vers l'histogramme en échelle de gris d'oeil droit cible ;
une unité de mappage (440) configurée pour effectuer la fonction de mappage d'oeil gauche pour la région prédéterminée de la première image d'oeil gauche pour obtenir une image d'oeil gauche améliorée de la première trame d'image, et effectuer la fonction de mappage d'oeil droit pour la région prédéterminée de la première image d'oeil droit pour obtenir une image d'oeil droit améliorée de la première trame d'image ; et
une unité de génération de carte de disparité (450) configurée pour générer, sur la base de l'image d'oeil gauche améliorée et de l'image d'oeil droit améliorée de la première trame d'image, une première carte de disparité correspondant à la première trame d'image ; dans lequel
les informations d'historique de la deuxième trame d'image comprennent un poids de la deuxième trame d'image, un histogramme en échelle de gris d'oeil gauche amélioré généré sur la base de l'image d'oeil gauche améliorée mémorisée précédemment de la deuxième trame d'image, et un histogramme en échelle de gris d'oeil droit amélioré généré sur la base de l'image d'oeil droit améliorée mémorisée précédemment de la deuxième trame d'image, et

l'unité de génération d'histogramme cible (420) génère, sur la base du poids de la deuxième trame d'image et de l'histogramme en échelle de gris d'oeil gauche amélioré, l'histogramme en échelle de gris d'oeil gauche cible, et génère, sur la base du poids de la deuxième trame d'image et de l'histogramme en échelle de gris d'oeil droit amélioré, l'histogramme en échelle de gris d'oeil droit cible ; et l'appareil étant **caractérisé en ce que** l'unité de génération d'histogramme cible (420) détermine, sur la base d'un rapport entre le nombre de pixels dans une région prédéterminée de la deuxième trame d'image dont les valeurs de disparité sont fiables et le nombre total de pixels dans la région prédéterminée de la deuxième trame d'image, le poids de la deuxième trame d'image.

5. Appareil pour générer une carte de disparité selon la revendication 4, dans lequel
l'unité de génération d'histogramme cible (420) détermine, sur la base d'un intervalle de temps entre la deuxième trame d'image et la première trame d'image, le poids de la deuxième trame d'image, dans lequel, plus l'intervalle de temps est petit entre la deuxième trame d'image et la première trame d'image, plus le poids est grand, et plus l'intervalle de temps est grand, plus le poids est petit.

6. Appareil pour générer une carte de disparité selon la revendication 4, l'appareil comprenant en outre :

une unité de mémorisation configurée pour mémoriser l'image d'oeil gauche améliorée, l'image d'oeil droit améliorée et la première carte de disparité de la première trame d'image pour générer une troisième carte de disparité correspondant à une troisième trame d'image, la troisième trame d'image étant une trame d'image photographiée par la caméra stéréo à un instant après le premier instant.

# FIG.1

```
┌─────────────────────────────────────┐
│  GENERATE INITIAL STANDARD GRAYSCALE │
│  HISTOGRAM AND INITIAL REFERENCE     │  ~S101
│  GRAYSCALE HISTOGRAM OF FIRST IMAGE  │
│  FRAME                               │
└─────────────────────────────────────┘
                    │
                    ▼
┌─────────────────────────────────────┐
│  GENERATE TARGET STANDARD GRAYSCALE  │
│  HISTOGRAM AND TARGET REFERENCE      │
│  GRAYSCALE HISTOGRAM OF FIRST IMAGE  │  ~S102
│  FRAME BASED ON HISTORICAL           │
│  INFORMATION OF SECOND IMAGE FRAME   │
└─────────────────────────────────────┘
                    │
                    ▼
┌─────────────────────────────────────┐
│  CALCULATE STANDARD MAPPING FUNCTION │  ~S103
│  AND REFERENCE MAPPING FUNCTION      │
└─────────────────────────────────────┘
                    │
                    ▼
┌─────────────────────────────────────┐
│  PERFORM STANDARD MAPPING FUNCTION   │
│  TO OBTAIN ENHANCED STANDARD IMAGE   │
│  OF FIRST IMAGE FRAME, AND PERFORM   │  ~S104
│  REFERENCE MAPPING FUNCTION TO OBTAIN│
│  ENHANCED REFERENCE IMAGE            │
└─────────────────────────────────────┘
                    │
                    ▼
┌─────────────────────────────────────┐
│  GENERATE FIRST DISPARITY MAP        │  ~S105
│  CORRESPONDING TO FIRST IMAGE FRAME  │
└─────────────────────────────────────┘
```

# FIG.2

200 PIXEL DISTANCE HISTOGRAM

# FIG.3

```
GENERATE TARGET STANDARD GRAYSCALE
HISTOGRAM BASED ON WEIGHT OF SECOND      ~S301
IMAGE FRAME AND ENHANCED STANDARD
GRAYSCALE HISTOGRAM
```

```
GENERATE TARGET REFERENCE
GRAYSCALE HISTOGRAM BASED ON WEIGHT      ~S302
OF SECOND IMAGE FRAME AND ENHANCED
REFERENCE GRAYSCALE HISTOGRAM
```

# FIG.4

400

**DISPARITY MAP GENERATION APPARATUS**

410

INITIAL HISTOGRAM GENERATION UNIT

430

FUNCTION CALCULATION UNIT

420

TARGET HISTOGRAM GENERATION UNIT

440

MAPPING UNIT

450

DISPARITY MAP GENERATION UNIT

# FIG.5

430

**FUNCTION CALCULATION UNIT**

510

FIRST FUNCTION CALCULATION MODULE

$G(p)$

530

THIRD FUNCTION CALCULATION MODULE

$D(p)$

520

SECOND FUNCTION CALCULATION MODULE

$F(p)$

# FIG.6

~600

DISPARITY MAP GENERATION HARDWARE SYSTEM

~610

INPUT APPARATUS

~630

OUTPUT APPARATUS

~620

PROCESSING APPARATUS

~640

STORAGE APPARATUS

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2014127151 A

**Non-patent literature cited in the description**

- Select Trends in Image, Video and Multidimensional Signal Processing [In the Spotlight. **GAURAV SHARMA et al.** IEEE SIGNAL PROCESSING MAGAZINE. IEEE SERVICE CENTER, January 2012, vol. 29, 174-176

- Flicker reduction in old films. **NARANJO V et al.** IMAGE PROCESSING, 2000. Proceedings. 2000 International Conference on September 10-13, 2000. IEEE, 10 September 2000, vol. 2, 657-659